# EUROPÄISCHE PATENTSCHRIFT

(11) **EP 3 269 439 B1**
(45) Veröffentlichungstag und Bekanntmachung des Hinweises auf die Patenterteilung: **12.02.2020**
(21) Anmeldenummer: 17176905.2
(22) Anmeldetag: 20.06.2017
(51) Int. Cl.: B01D 46/00, B01D 46/24

(54) **STEUEREINRICHTUNG FÜR EINE REINIGUNGSEINRICHTUNG EINER FILTEREINRICHTUNG**
CONTROL DEVICE FOR A CLEANING DEVICE OF A FILTER DEVICE
DISPOSITIF DE COMMANDE POUR UN DISPOSITIF DE NETTOYAGE D'UN DISPOSITIF DE FILTRE

(30) Priorität: 12.07.2016 DE 102016212676
(43) Veröffentlichungstag der Anmeldung: 17.01.2018
(73) Patentinhaber: Filtration Group GmbH, 74613 Öhringen (DE)
(72) Erfinder: PÜTTMANN, Herbert, 74639 Zweiflingen (DE); WIERLING, Reinhard, 74629 Pfedelbach (DE)
(74) Vertreter: BRP Renaud & Partner mbB Rechtsanwälte Patentanwälte Steuerberater

(56) Entgegenhaltungen:
- DE-A1-102007 035 225
- DE-C1- 19 854 704
- US-A- 5 599 364
- US-A1- 2015 219 047

## Beschreibung

Die vorliegende Erfindung betrifft eine Steuereinrichtung mit den Merkmalen des Oberbegriffs des Anspruchs 1, die zum Ansteuern einer Rotationsdüse dient, die ihrerseits zum Rückspülen wenigstens eines Filterelements einer Filtereinrichtung dient, wobei die Filtereinrichtung zum Filtern eines Gases bzw. Gasgemisches, vorzugsweise von Luft, dient. Die Erfindung betrifft außerdem eine mit einer Rotationsdüse sowie mit einer derartigen Steuereinrichtung ausgestattete Reinigungseinrichtung für eine Filtereinrichtung zum Filtern eines Gases, wie zum Beispiel Luft. Die Erfindung betrifft schließlich eine mit einer derartigen Reinigungseinrichtung ausgestattete Filtereinrichtung zum Filtern eines Gases, wie zum Beispiel Luft.

Eine Filtereinrichtung mit einer Reinigungseinrichtung und mit einer gattungsgemäßen Steuereinrichtung ist aus der DE 10 2007 035 225 A1 bekannt, auf deren Inhalt hiermit vollumfänglich Bezug genommen wird. Derartige Filtereinrichtungen dienen vorzugsweise zum Entstauben von Luft, beispielsweise in Industrieanlagen. Dabei kommen ringförmige Filterelemente zum Einsatz, die während des Filtrationsbetriebs radial von außen nach innen durchströmt werden. Dabei lagern sich die abgeschiedenen Verunreinigungen, in der Regel Festkörperpartikel wie Staub, außen am Filterelement an. Mit Hilfe einer Rotationsdüse kann ein Regenerations- oder Reinigungszyklus durchgeführt werden, bei dem das Filterelement radial von innen mit einem Rückspülmedium beaufschlagt werden kann, um die außen angelagerten Verunreinigungen abzuspülen. Als Rückspülmedium kann zum Beispiel das mit Hilfe der Filtereinrichtung gereinigte Gas genutzt werden, vorzugsweise Luft. Zum Ansteuern der Rotationsdüse, also zum Aktivieren und Deaktivieren der Rückspülung mittels der Rotationsdüse kommt eine Steuereinrichtung zum Einsatz. Die bekannte Steuereinrichtung besitzt eine Grundplatte, die eine Durchlassöffnung für gefiltertes Gas aufweist. Ferner ist eine an der Grundplatte befestigte Konsole vorgesehen, an der ein Zuführrohr zum Zuführen von Rückspülmedium zur Rotationsdüse befestigt ist. Des Weiteren ist ein an der Konsole bzw. am Zuführrohr befestigter Zylinderkörper vorgesehen, der einen das Zuführrohr umschließenden Zylinder enthält. Im Zylinderkörper ist ein Kolben axial verstellbar, der im Zylinder einen Steuerraum von einem Rückstellraum trennt. Der Steuerraum ist mit einem das Rückspülmedium führenden Innenraum des Zuführrohrs fluidisch verbunden. Der Rückstellraum ist zur Umgebung des Zylinderkörpers offen. Des Weiteren ist eine Steuerhülse vorgesehen, die außen am Zuführrohr axial verstellbar und axial geführt ist und die mit dem Kolben verbunden ist. Außerdem ist eine Stauscheibe zum Steuern der Durchlassöffnung mit der Steuerhülse verbunden. Die Stauscheibe, die Steuerhülse und der Kolben bilden nun eine axial hubverstellbare Einheit, die abhängig von der Druckdifferenz zwischen Steuerraum und Rückstellraum zwischen einer Schließstellung, in der die Stauscheibe die Durchlassöffnung verschließt, und einer Offenstellung verstellbar ist, in der die Stauscheibe die Durchlassöffnung öffnet.

Aufgrund von Herstellungstoleranzen kann es dazu kommen, dass eine Längsmittelachse des Zuführrohrs mehr oder weniger stark von einer exakt senkrechten Ausrichtung gegenüber einer Ebene abweicht, in der sich die Grundplatte zumindest in einem die Durchlassöffnung einfassenden Randbereich erstreckt. Dementsprechend kann die Stauscheibe in ihrer Schließstellung schief bzw. einseitig an der Grundplatte zur Anlage kommen, was zu Verspannungen innerhalb der Stauscheibe führen und durch Materialermüdung schließlich zu einer Beschädigung der Stauscheibe führen kann. Ferner kann die Stauscheibe beim Verstellen in die Schließstellung durch einen asymmetrischen Kontakt vergleichsweise robust auf die Grundplatte auftreffen, was ebenfalls zu einem hohen Verschleiß führt. Des Weiteren hat sich gezeigt, dass zwischen dem Zuführrohr und der Steuerhülse, insbesondere bei einem Verkanten, vergleichsweise hohe Reibungswerte auftreten können, was die Funktionalität der Steuereinrichtung beeinträchtigen kann. Schließlich besitzt die bekannte Steuereinrichtung einen vergleichsweise komplexen Aufbau, der entsprechend hohe Herstellungskosten zur Folge hat.

Die vorliegende Erfindung beschäftigt sich mit dem Problem, für eine Steuereinrichtung der vorstehend beschriebenen Art bzw. für eine damit ausgestattete Reinigungseinrichtung bzw. für eine damit ausgestattete Filtereinrichtung eine verbesserte oder zumindest eine andere Ausführungsform anzugeben, bei der wenigstens einer der vorstehend genannten Nachteile behoben oder zumindest reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Steuerhülse und das Zuführrohr tribologisch aufeinander abzustimmen, um die Reibung und den Verschleiß von Steuerhülse und/oder Zuführrohr zu reduzieren. Durch die reduzierte Reibung wird außerdem die Gefahr eines Verkantens reduziert, was die Funktionssicherheit der Steuereinrichtung erhöht. Im Einzelnen wird vorgeschlagen, die Steuerhülse aus Messing bzw. aus einer Messinglegierung herzustellen. Eine Messinglegierung ist eine Kupfer-Zink-Legierung. Es hat sich gezeigt, dass dadurch besonders niedrige Reibungswerte zwischen Zuführrohr und Steuerhülse erzielbar sind. Dies gilt insbesondere dann, wenn das Zuführrohr aus einer Eisenlegierung, vorzugsweise Stahl, oder aus einer Leichtmetalllegierung, vorzugsweise Aluminiumlegierung hergestellt ist.

Vorteilhaft ist dabei eine bleihaltige Messinglegierung. Besonders vorteilhaft liegt der Anteil an Blei in der Messinglegierung in einem Bereich von 1 Gew.-% bis 5 Gew.-%, vorzugsweise in einem Bereich von 2 Gew.-% bis 4 Gew.-%, jeweils einschließlich der Bereichsgrenzen. Insbesondere liegt der Bleianteil bei etwa 3 Gew.-%. Dabei bedeutet "Gew.-%" in üblicher Weise "Gewichtsprozent", was in der Regel auch "Masseprozent" entspricht.

Ferner hat sich als besonders vorteilhaft eine Messinglegierung mit relativ hohem Zinkanteil herausgestellt. Ein hoher Zinkanteil liegt vor, wenn der Zinkanteil in der Messinglegierung mehr als 30 Gew.-% hat. Je höher der Zinkanteil, desto mehr wird innerhalb der Messinglegierung die Alpha-Phase durch die Beta-Phase verdrängt. Dies hat zur Folge, dass die Temperaturen, bei denen eine plastische Verformbarkeit der Messinglegierung möglich ist, zunehmen. Besonders vorteilhaft ist dabei ein Zinkanteil von mindestens 37 Gew.-%. Ab diesem Zinkanteil ist nur noch eine Warmverformung bei mindestens 600°C möglich, während unterhalb von 37 Gew.-% noch eine Kaltverformung möglich ist. Insbesondere kann der Anteil an Zink in der Messinglegierung somit in einem Bereich von 37 Gew.-% bis 43 Gew.-%, vorzugsweise in einem Bereich von 38 Gew.-% bis 41 Gew.-%, jeweils einschließlich der Bereichsgrenzen. Insbesondere liegt der Zinkanteil bei etwa 39 Gew.-%.

Als besonders geeignet hat sich eine Messinglegierung herausgestellt, die einen Bleianteil von etwa 3 Gew.-%, einen Zinkanteil von etwa 39 Gew.-% und einen Kupferanteil von etwa 58 Gew.-% aufweist, also eine Legierung mit der Bezeichnung Cu Zn 39 Pb 3, die auch als Werkstoff 2.0401 bezeichnet wird.

Zweckmäßig kann das Zuführrohr aus Stahl hergestellt sein, insbesondere kann es sich hierbei um Edelstahl handeln. Denkbar ist z.B. Stahl 1.4301 oder 1.4571. Alternativ und bevorzugt ist eine Ausführungsform, bei welcher das Zuführrohr aus Aluminium bzw. aus einer Aluminiumlegierung hergestellt ist, wie z.B. Aluminium 3.3206 bzw. Al Mg Si 05 F 22.

Entsprechend einer anderen Ausführungsform, kann vorgesehen sein, dass die Steuerhülse zwei axiale Endabschnitte aufweist, nämlich einen ersten Endabschnitt und einen zweiten Endabschnitt. Am ersten Endabschnitt ist der Kolben angeordnet, während am zweiten Endabschnitt die Stauscheibe angeordnet ist. Besonders vorteilhaft ist nun eine Ausgestaltung bei der die Steuerhülse ausschließlich im Bereich der beiden Endabschnitte am Zuführrohr radial anliegt. Somit erfolgt die Lagerung und Führung der Steuerhülse am Zuführrohr ausschließlich über diese beiden Endabschnitte. Hierdurch läßt sich die Gefahr eines Verkantens weiter reduzieren. Die beiden Endabschnitte sind axial voneinander beabstandet. Axial zwischen den beiden Endabschnitten besitzt die Steuerhülse somit einen mittleren Bereich, der sich nicht an dem Zuführrohr abstützt. Insbesondere kann radial zwischen diesem mittleren Abschnitt und dem Zuführrohr ein Ringspalt ausgebildet sein. Die Endabschnitte besitzen für die Lagerung und Führung der Steuerhülse am Zuführrohr zweckmäßig jeweils eine zylindrische Innenkontur, die bevorzugt flächig und ringförmig geschlossen an einer zylindrischen Außenkontur des Zuführrohrs anliegt. Axial zwischen den beiden Endabschnitten besitzt die Steuerhülse den mittleren Abschnitt oder Mittelabschnitt, der die beiden Endabschnitte axial miteinander verbindet und der gegenüber dem Zuführrohr radial beabstandet ist. Dementsprechend definieren die beiden Endabschnitte radial innen zwei Führungsringe, die eine besonders effiziente, reibungsarme Längsführung der Steuerhülse an dem Zuführrohr ermöglichen.

Entsprechend einer anderen, besonders vorteilhaften Ausfürhungsform kann vorgesehen sein, dass die Stauscheibe nicht in herkömmlicher Weise starr mit der Steuerhülse verbunden ist, sondern daran beweglich angebracht ist, derart, dass die Stauscheibe in der Schließstellung toleranzbedingte Lageabweichungen zwischen Zuführrohr und Grundplatte ausgleichen kann. In der Folge kann die Stauscheibe ihre räumliche Ausrichtung zur Steuerhülse und somit zum Zuführrohr verändern, so dass variierende Neigungswinkel zwischen der Längsmittelachse des Zuführrohrs und einer Normalrichtung der Stauscheibe einstellbar sind, die senkrecht auf einer Ebene steht, in der sich die Stauscheibe erstreckt. Insbesondere kann sich die beweglich an der Steuerhülse gehaltene Stauscheibe in der Schließstellung parallel zur Grundplatte ausrichten. Somit kann die beweglich an der Steuerhülse gehaltene Stauscheibe toleranzbedingte räumliche Lageabweichungen zwischen Grundplatte und Zuführrohr ausgleichen. Durch den Bewegungsfreiheitsgrad der Stauscheibe gegenüber der Steuerhülse lassen sich Spannungen innerhalb der Stauscheibe in der Schließstellung reduzieren, was die Materialbeanspruchung und somit den Verschleiß der Steuereinrichtung reduziert.

Zweckmäßig kann die Stauscheibe mittels eines Federelements axial federnd an der Steuerhülse abgestützt sein. Hierdurch kann die Stauscheibe federelastisch ihre räumliche Ausrichtung beim Einnehmen der Schließstellung verändern, um die toleranzbedingten räumlichen Lageabweichungen zwischen Stauscheibe und Grundplatte zu eliminieren.

Zusätzlich oder alternativ kann an der Steuerhülse eine Haltescheibe axial abgestützt sein, an der über ein elastisches Element die Stauscheibe axial abgestützt ist. Auch dieses elastische Element ermöglicht räumliche Ausgleichsbewegungen zum Ausrichten der Stauscheibe zur Grundplatte beim Einnehmen der Schließstellung.

Zweckmäßig kann vorgesehen sein, dass sich das Federelement an einer der Durchlassöffnung zugewandten Seite der Stauscheibe befindet, während sich das elastische Element an einer von der Durchlassöffnung abgewandten Seite der Stauscheibe befindet. Bei dieser Bauweise ist die Stauscheibe mit Hilfe des Federelements gegen das elastische Element axial vorgespannt, was insbesondere in der Offenstellung eine Geräuschentwicklung durch Relativbewegungen zwischen Stauscheibe und Steuerhülse verhindert. Ferner bewirkt diese Bauweise eine Schlagdämpfung und somit eine Reduzierung der Geräuschentwicklung beim Erreichen der Schließstellung, also beim Aufschlagen der Stauscheibe auf die Grundplatte.

Bei einer Weiterbildung können das Federelement, die Stauscheibe, das elastische Element und die Haltescheibe mittels eines Sicherungsrings an der Steuerhülse axial gesichert sein. Dies vereinfacht die Montage der vorstehend genannten Einheit.

Beispielsweise besteht das elastische Element aus einem Elastomer oder aus einem PU-Schaum. Insbesondere kann das elastische Element durch eine Dichtung gebildet sein. Somit handelt es sich beim elastischen Element um ein handelsübliches, preiswertes Element, das die erforderliche Elastizität besitzt. Insbesondere handelt es sich um eine Dichtscheibe bzw. um eine scheibenförmige Flachdichtung.

Bei einer anderen vorteilhaften Ausführungsform kann vorgesehen sein, dass der Kolben durch mehrere Kolbenscheiben gebildet ist, die an der Steuerhülse axial gesichert sind. Zweckmäßig sind nun die Kolbenscheiben und die Haltescheibe baugleich und somit gegeneinander austauschbar ausgestaltet. Durch die Ausgestaltung der Kolbenscheiben und der Haltescheibe als Gleichteile lässt sich die Stückzahl für diese Gleichteile erhöhen, was die Produktionskosten senkt. Die einzelnen Kolbenscheiben können aneinander über Stützringe axial abgestützt sein. Ferner kann eine der Kolbenscheiben über einen solchen Stützring axial an der Steuerhülse, z.B. über eine daran ausgeformte Stufe, abgestützt sein. Auch die Haltescheibe kann über einen solchen Stützring axial an der Steuerhülse, z.B. über eine daran ausgeformte Stufe, abgestützt sein. Zweckmäßig sind dabei sämtliche Stützringe, die an der Steuerhülse zum Einsatz kommen, baugleich ausgestaltet, also als Gleichteile konfiguriert.

Die Steuerhülse besitzt einen ersten Endabschnitt zum Anbringen des Kolbens sowie einen zweiten Endabschnitt zum Anbringen der Stauscheibe. Besonders vorteilhaft ist nun eine Ausführungsform, bei der die beiden Endabschnitte der Steuerhülse identisch ausgestaltet sind. Durch diese Bauweise vereinfacht sich die Herstellung der Steuerhülse. Ferner vereinfacht sich die Montage der vorstehend beschriebenen Einheit, da Verwechslungen ausgeschlossen sind.

Gemäß einer anderen vorteilhaften Ausführungsform kann die Stauscheibe einen mit der Steuerhülse verbundenen Innenringbereich und einen in der Schließstellung mit einem die Durchlassöffnung einfassenden Öffnungsrand zusammenwirkenden Außenringbereich aufweisen, die axial zueinander versetzt sind. Durch diesen axialen Versatz zwischen Innenringbereich und Außenringbereich besitzt die Stauscheibe eine vergleichsweise hohe Formstabilität, wodurch sie höheren mechanischen Belastungen ausgesetzt werden kann.

Die Stauscheibe kann einen Verbindungsringbereich aufweisen, der den Innenringbereich mit dem Außenringbereich verbindet. Dieser Verbindungsringbereich kann dabei im Profil geradlinig oder gekrümmt ausgestaltet sein. Ein im Profil geradliniger Verbindungsringbereich führt zu einem konischen Verbindungsringbereich. Ein im Profil gebogener Verbindungsringbereich führt zu einem sphärischen Verbindungsringbereich.

Eine erfindungsgemäße Reinigungseinrichtung, die für eine Filtereinrichtung zum Filtern eines Gases, wie zum Beispiel Luft, geeignet ist, umfasst zumindest eine Rotationsdüse zum Rückspülen wenigstens eines Filterelements der Filtereinrichtung. Ferner ist eine Steuereinrichtung der vorstehend beschriebenen Art vorgesehen, die zum Ansteuern der wenigstens einen Rotationsdüse dient. Das Zuführrohr der Steuereinrichtung ist fluidisch mit der jeweiligen Rotationsdüse gekoppelt, so dass während des Rückspülbetriebs die Beaufschlagung der Rotationsdüse mit Rückspülmedium durch das Zuführrohr hindurch, also durch dessen Innenraum hindurch erfolgt.

Eine erfindungsgemäße Filtereinrichtung, die zum Filtern eines Gases, wie zum Beispiel Luft, geeignet ist, umfasst zumindest ein ringförmiges Filterelement und wenigstens eine Reinigungseinrichtung der vorstehend beschriebenen Art. Das Filterelement ist dabei mit einer axialen Stirnseite an der Grundplatte der Filtereinrichtung befestigt, wobei die jeweilige Rotationsdüse im Inneren des Filterelements angeordnet ist. Somit erfolgt die Rückspülung des Filterelements während eines Rückspülbetriebs radial von innen nach außen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte isometrische Ansicht einer Filtereinrichtung während eines Filtrationsbetriebs,
- Fig. 2: eine isometrische Ansicht der Filtereinrichtung wie in Fig. 1, jedoch während eines Rückspülbetriebs,
- Fig. 3: ein Längsschnitt durch die Filtereinrichtung im Bereich einer Steuereinrichtung,
- Fig. 4: ein vergrößertes Detail IV aus Fig. 3.

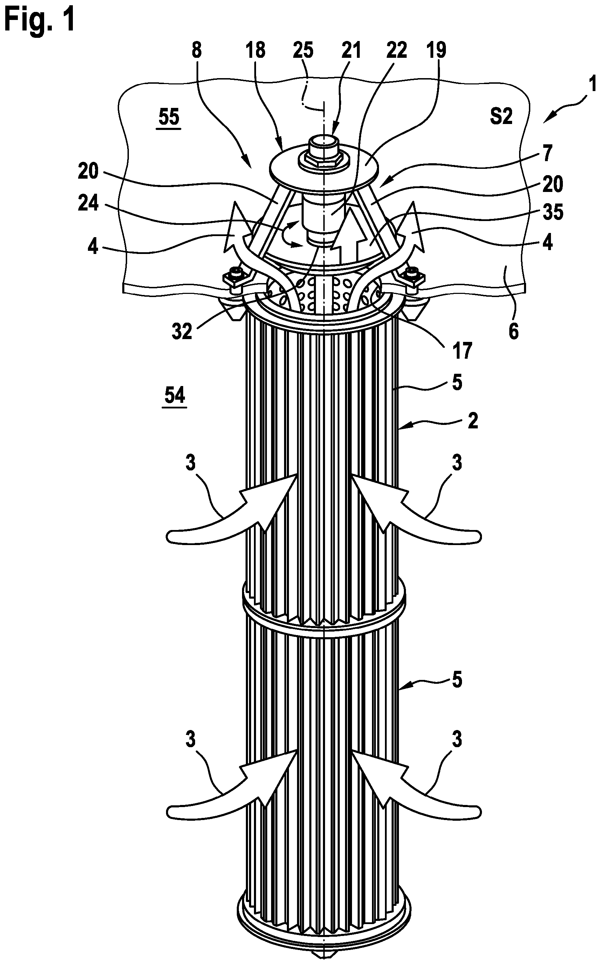

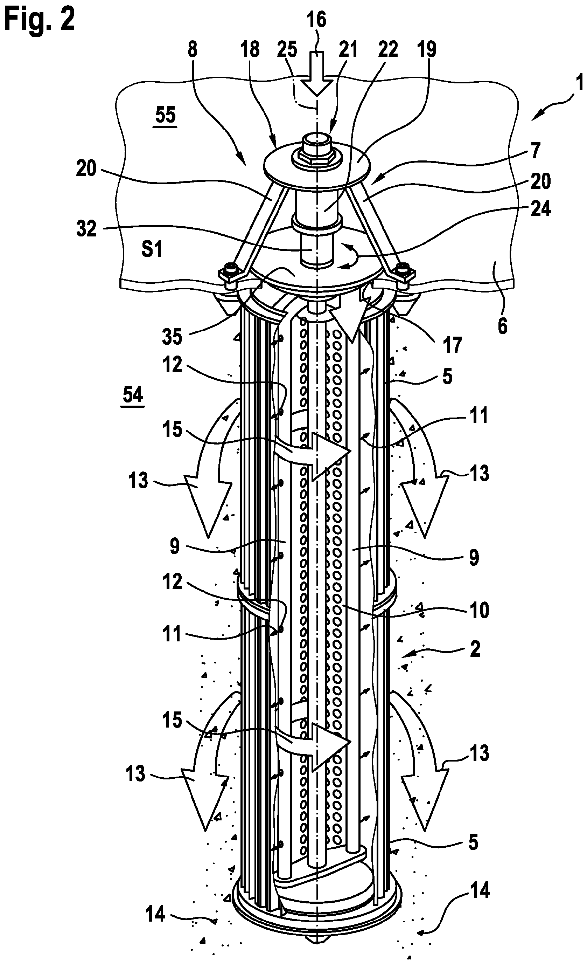

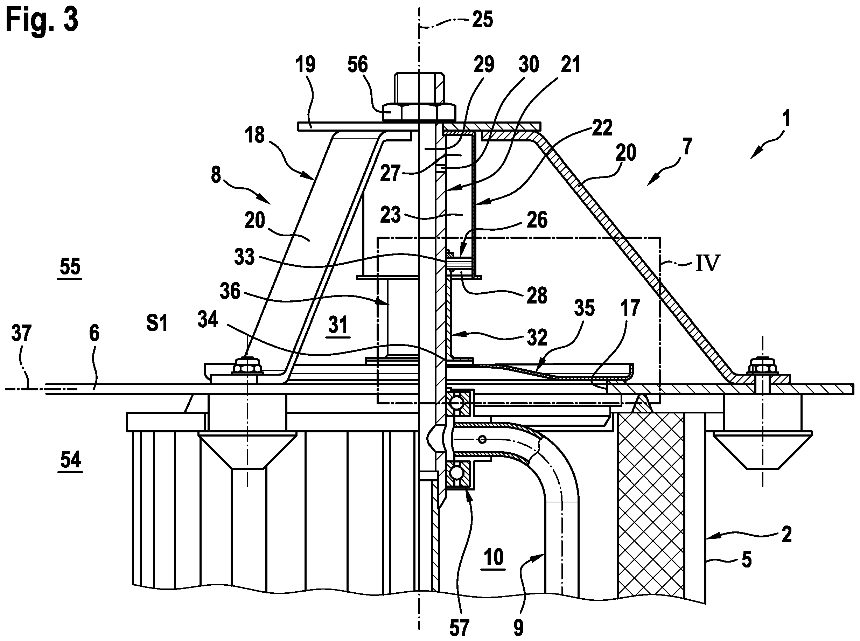

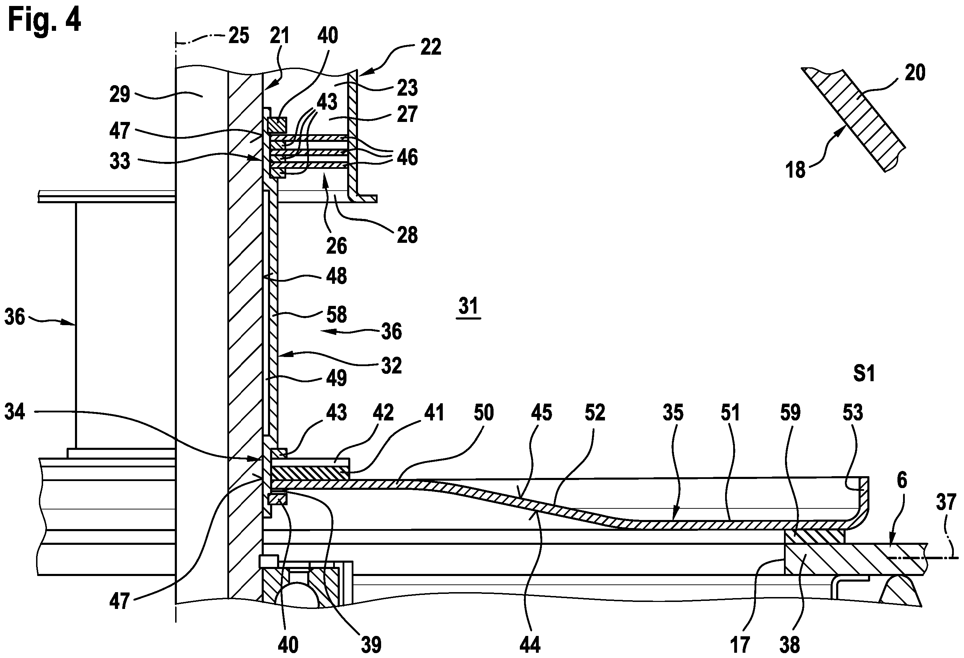

Entsprechend den Figuren 1 und 2 umfasst eine Filtereinrichtung 1, die zum Filtern eines Gases, vorzugsweise Luft, dient, zumindest ein ringförmiges Filterelement 2, das von dem zu reinigenden Gas radial von außen nach innen durchströmbar ist und dabei gereinigt wird. In Figur 1 ist ein zu reinigender Gasstrom durch Pfeile 3 angedeutet, der das jeweilige Filterelement 2 an einer Rohseite 54 von außen beaufschlagt. Ein gereinigter Gasstrom ist dagegen durch Pfeile 4 angedeutet, der die Filtereinrichtung 1 an einer Reinseite 55 verlässt. Im Beispiel der Figuren 1 und 2 ist das Filterelement 2 durch zwei ringförmige Filterkörper 5 gebildet, die axial aneinander angebaut sind. Das Filterelement 2 ist mit einer axialen Stirnseite an einer Grundplatte 6 befestigt, die Bestandteil einer Steuereinrichtung 7 ist, die ihrerseits Bestandteil einer Reinigungseinrichtung 8 ist. Die Filtereinrichtung 1 ist demnach mit einer Reinigungseinrichtung 8 ausgestattet, die zum Durchführen eines Reinigungsbetriebs zum Reinigen des Filterelements 2 geeignet ist. Gemäß Figur 2 besitzt die Reinigungseinrichtung 8 zumindest eine Rotationsdüse 9, mit deren Hilfe eine Rückspülung des Filterelements 2 durchführbar ist. Im Beispiel der Figur 2 sind zwei Rotationsdüsen 9 vorgesehen, die einander diametral gegenüberliegend angeordnet sind. Dabei sind die Rotationsdüsen 9 im Inneren 10 des Filterelements 2 angeordnet, so dass sie das Filterelement 2 mit dem jeweiligen Rückspülmedium radial von innen beaufschlagen können. Im Beispiel der Fig. 3 und 4 ist die Rotationsdüse 9 über ein Lager 57, das hier als doppeltes Kugellager 57 ausgestaltet ist, drehbar am Zuführrohr 21 gelagert. Eine Rückspülströmung ist in Figur 2 durch Pfeile 11 angedeutet, die radial aus Düsenöffnungen 12 der Rückspüldüsen 9 austritt. Die Beaufschlagung der Innenseite des Filterelements 2 mit Rückspülmedium führt an der Außenseite des Filterelements 2 dazu, dass sich dort abgelagerte Verunreinigungen wieder lösen. Das Abspülen dieser Verunreinigungen ist in Figur 2 durch Pfeile 13 angedeutet. Ferner sind in Figur 2 Verunreinigungsflocken 14 angedeutet, die auf der Rohseite 54 schwerkraftbedingt nach unten abfallen.

In Figur 2 ist außerdem durch Drehrichtungspfeile 15 eine Rotation der Rotationsdüsen 9 angedeutet. Diese Rotation kann beispielsweise durch eine leicht in Umfangsrichtung orientierte Ausrichtung wenigstens einer der Düsenöffnungen 12 erreicht werden. Ebenso kann vorgesehen sein, dass die jeweilige Rotationsdüse 9 spezielle Antriebsdüsenöffnungen aufweist, die zum Antreiben der Rotationsdüse 9 dienen und hierzu in der Umfangsrichtung orientiert sind, während die zum Rückspülen dienenden Düsenöffnungen 12 radial auf den Filterkörper ausgerichtet sind. Die Rotationsdüsen 9 sind dann nach dem Rückstoßprinzip rotierend angetrieben. Die Zuführung des Reinigungsmediums zur Reinigungseinrichtung 8 bzw. zur Steuereinrichtung 7 ist in Figur 2 durch einen Pfeil 16 angedeutet. Beim Rückspülmedium 16 handelt es sich zweckmäßig um das gereinigte Gas, vorzugsweise Luft.

Die Steuereinrichtung 7 umfasst gemäß den Figuren 1 bis 4 eine Durchlassöffnung 17 für gefiltertes Gas, die in der Grundplatte 6 ausgebildet ist. Ferner umfasst die Steuereinrichtung 7 eine Konsole 18. Die Konsole 18 kann beispielsweise eine Stützplatte 19 und drei Stützarme 20 aufweisen, die in der Umfangsrichtung verteilt angeordnet sind. Es ist klar, dass grundsätzlich auch mehr oder weniger Stützarme 20 vorgesehen sein können. Die Konsole 18 ist an der Grundplatte 6 befestigt, was hier über die Stützarme 20 erfolgt. An dieser Konsole 18 ist ein Zuführrohr 21 befestigt, das zum Zuführen des Rückspülmediums zur jeweiligen Rotationsdüse 9 dient. Dementsprechend ist das Zuführrohr 21 fluidisch mit der jeweiligen Rotationsdüse 9 gekoppelt. Die eigentliche Strömungsführung des Zuführrohrs 21 erfolgt dabei in einem Innenraum 29 des Zuführrohrs 21, den das Zuführrohr 21 in Umfangsrichtung 24 umschließt.

Die Steuereinrichtung 7 ist außerdem mit einem Zylinderkörper 22 ausgestattet, der auf geeignete Weise an der Konsole 18 und/oder am Zuführrohr 21 befestigt ist. Im Beispiel ist der Zylinderkörper 22 topfförmig ausgestaltet und gemeinsam mit der Stützplatte 19 mittels einer Mutter 56 am Zuführrohr 21 fixiert. Im Zylinderkörper 22 befindet sich ein Zylinderraum 23 oder Zylinder 23. Der Zylinderkörper 22 und der Zylinder 23 umschließen das Zuführrohr 21 in Umfangsrichtung 24. Die Umfangsrichtung 24 ist in den Figuren 1 und 2 durch einen mit 24 bezeichneten Doppelpfeil angedeutet. Die Umfangsrichtung 24 bezieht sich dabei auf eine Längsmittelachse 25 des Zuführrohrs 21.

Im Zylinderkörper 22 ist ein Kolben 26 axial verstellbar angeordnet. Der Kolben 26 trennt im Zylinder 23 axial einen Steuerraum 27 von einem Rückstellraum 28. Der Steuerraum 27 ist mit dem Innenraum 29 des Zuführrohrs 21 fluidisch verbunden, beispielsweise durch eine oder mehrere radiale Verbindungsöffnungen 30. Der Rückstellraum 28 ist zu einer Umgebung 31 des Zylinderkörpers 22 offen, die zur Reinseite 55 gehört. Somit herrscht im Rückstellraum 28 der reinseitige Druck der Filtereinrichtung 1. Im Steuerraum 27 herrscht dagegen der Druck des Rückspülmediums.

Außen am Zuführrohr 21 ist eine Steuerhülse 32 axial verstellbar und außerdem axial geführt. Die Steuerhülse 32 ist in einem ersten Endbereich 33 mit dem Kolben 26 verbunden und mit einem vom ersten Endbereich 33 axial beabstandeten zweiten Endbereich 34 mit einer Stauscheibe 35 verbunden. Die Stauscheibe 35 dient zum Steuern der Durchlassöffnung 17. Hierzu bilden die Stauscheibe 35, die Steuerhülse 32 und der Kolben 26 eine Einheit 36, die abhängig vom Differenzdruck zwischen Steuerraum 27 und Rückstellraum 28 zwischen einer in den Figuren 2 bis 4 wiedergegebenen Schließstellung S1 und einer in Figur 1 wiedergegebenen Offenstellung S2 verstellbar ist. In der Schließstellung S1 verschließt die Stauscheibe 35 die Durchlassöffnung 17 zur Durchführung des Rückspülbetriebs. In der Offenstellung S2 gibt die Stauscheibe 35 die Durchlassöffnung 17 frei zur Durchführung des Filtrationsbetriebs.

Gemäß Figur 4 ist die Stauscheibe 35 beim hier vorgestellten, bevorzugten Beispiel nicht starr, sondern beweglich an der Steuerhülse 32 gehalten. In der Folge kann die Stauscheibe 35 relativ zur Längsmittelachse 25 des Zuführrohrs 21 verkippen bzw. dazu ihre Relativlage verändern. In der Folge lassen sich Herstellungstoleranzen ausgleichen, die dazu führen, dass eine Ebene 37, in der sich die Grundplatte 6 zumindest im Bereich eines Öffnungsrands 38 erstreckt, der die Durchlassöffnung 17 einfasst, nicht exakt senkrecht zur Längsmittelachse 25 ausgerichtet ist. Somit schließt einerseits die Stauscheibe 35 die Durchlassöffnung 17 effizient ab. Andererseits werden dadurch Spannungen innerhalb der Stauscheibe 35 und innerhalb der Steuereinrichtung 7 reduziert.

Die bewegliche Halterung der Stauscheibe 35 an der Steuerhülse 32 kann beispielsweise mittels eines Federelements 39 realisiert werden, über das die Stauscheibe 35 axial federnd an der Steuerhülse 32 abgestützt ist. Im Beispiel stützt sich das Federelement 39 über einen Sicherungsring 40 an der Steuerhülse 32 axial ab, der hierzu in eine entsprechende, nicht näher bezeichnete, am zweiten Endabschnitt 34 ausgebildete Aufnahmenut eingesetzt ist. Das Federelement 39 ist hier nach Art einer Wellringfeder ausgestaltet. Zusätzlich oder alternativ kann außerdem ein elastisches Element 41 vorgesehen sein, das die Stauscheibe 35 an einer Haltescheibe 42 axial abstützt, die ihrerseits über einen Stützring 43 an der Steuerhülse 32 axial abgestützt ist. Sofern wie hier sowohl das Federelement 39 als auch das elastische Element 41 vorgesehen sind, ist das Federelement 39 bevorzugt an einer der Durchlassöffnung 17 zugewandten Unterseite 44 der Stauscheibe 35 angeordnet, während sich das elastische Element 41 an einer von der Durchlassöffnung 17 abgewandten Oberseite 45 der Stauscheibe 35 befindet. Das elastische Element 41 kann beispielsweise durch eine Dichtung aus einem üblichen Dichtungsmaterial gebildet sein.

Im Beispiel ist der Kolben 26 durch mehrere Kolbenscheiben 46 gebildet. Im Beispiel sind rein exemplarisch drei derartige Kolbenscheiben 46 vorgesehen. Die einzelnen Kolbenscheiben 46 sind durch Stützringe 43 axial aneinander abgestützt. Ferner ist der Kolben 26, also die Gruppe der Kolbenscheiben 46 ebenfalls über einen solchen Stützring 43 an der Steuerhülse 32 axial abgestützt. Der Kolben 26 bzw. die Anordnung aus Kolbenscheiben 46 und Stützringen 43 ist ebenfalls mittels eines Sicherungsrings 40 an der Steuerhülse 32 axial gesichert. Auch hier greift der Sicherungsring 40 in eine entsprechende, nicht näher bezeichnete Umfangsnut ein, die am ersten Endabschnitt 33 der Steuerhülse 32 ausgebildet ist. Besonders vorteilhaft ist nun eine Ausführungsform, bei der diese Kolbenscheiben 46 und die zuvor genannte Haltescheibe 42 baugleich ausgestaltet sind, also Gleichteile sind. Dies vereinfacht den Zusammenbau der Steuereinrichtung 7, da die Gefahr von Verwechslungen reduziert ist.

Zweckmäßig ist hier vorgesehen, dass sich die Steuerhülse 32 ausschließlich über die beiden Endabschnitte 33 und 34 radial an dem Zuführrohr 21 abstützt. Zweckmäßig können dabei die beiden Endabschnitte 33, 34 radial innen jeweils eine zylindrische Innenkontur 47 aufweisen, die flächig an einer ebenfalls zylindrischen Außenkontur 48 des Zuführrohrs 21 anliegen. Zusätzlich oder alternativ kann vorgesehen sein, dass die beiden Endabschnitte 33, 34 identisch ausgestaltet sind. Somit ist auch hier der Zusammenbau der Steuereinrichtung 7 vereinfacht, da Verwechslungen ausgeschlossen sind.

Das Zuführrohr 21 kann zum Beispiel aus einem Stahl, wie z.B. aus Stahl 1.4301 oder 1.4571, vorzugsweise aus einem Edelstahl, hergestellt werden. Alternativ und bevorzugt kann das Zuführrohr 21 aus Aluminium bzw. aus einer Aluminiumlegierung hergestellt werden, wie z.B. Aluminium 3.3206 bzw. Al Mg Si 05 F 22. Im Unterschied ist die Steuerhülse 32 aus einer Messinglegierung hergestellt. Bevorzugt ist dabei eine bleihaltige Messinglegierung. Ferner ist eine Messinglegierung mit einem vergleichsweise hohen Zinkanteil bevorzugt. Der Zinkanteil beträgt wenigstens 35 Gew.-%. Besonders vorteilhaft besteht die Steuerhülse 32 aus einer Messinglegierung, die wie folgt bezeichnet wird: Cu Zn 39 Pb 3.

Da sich wie hier die Steuerhülse 32 nur über die Endabschnitte 33, 34 radial an dem Zuführrohr 21 abstützt, ist ein Mittelabschnitt 58 der Steuerhülse 32, der die beiden Endabschnitte 33, 34 miteinander verbindet, gegenüber dem Zuführrohr 21 radial beabstandet, so dass radial zwischen dem Zuführrohr 21 und diesem Mittelabschnitt 58 ein umlaufender Ringraum 49 ausgebildet ist.

Im Beispiel der Figuren 3 und 4 besitzt die Stauscheibe 35 einen Innenringbereich 50 und einen Außenringbereich 51, die über einen Verbindungsringbereich 52 fest miteinander verbunden sind. Der Innenringbereich 50 ist mit der Steuerhülse 32 verbunden. Der Außenringbereich 51 wirkt in der Schließstellung S1 mit dem Öffnungsrand 38 der Grundplatte 6 zusammen. Bemerkenswert ist nun, dass Innenringbereich 50 und Außenringbereich 51 in dieser Ausführungsform parallel zur Längsmittelachse 25, also axial zueinander versetzt angeordnet sind. Erreicht wird dies durch einen entsprechend geformten Verbindungsringbereich 52, der hier konisch geformt ist. Der Außenringbereich 51 ist hier außerdem mit einem abgewinkelten, in Umfangsrichtung geschlossen umlaufenden Kragen 53 versehen. Durch die genannten Maßnahmen besitzt die Stauscheibe 35 eine vergleichsweise hohe Formstabilität und Steifigkeit.

Im Beispiel der Fig. 3 und 4 ist außerdem ein elastisches Ringelement 59 gezeigt, das in der Schließstellung S1 axial zwischen dem Öffnungsrand 38 und der Stauscheibe 35 angeordnet ist und dabei axial einerseits an der Stauscheibe 35 und axial andererseits am Öffnungsrand 38 axial unmittelbar anliegt. Zweckmäßig ist das Ringelement 59 am Öffnungsrand 38 oder an der Stauscheibe 35 befestigt. Das Ringelement 59 kann als Dichtung ausgestaltet sein, um das Verschließen der Durchlassöffnung 17 in der Schließstellung S1 zu verbessern. Gleichzeitig bewirkt sie es auch eine elastische Dämpfung des Kontakts zwischen Stauscheibe 35 und Grundplatte 6 beim Einfahren der Stauscheibe 35 in die Schließstellung S1.

Die hier vorgestellten Filtereinrichtung 1 bzw. deren Reinigungseinrichtung 8 bzw. deren Steuereinrichtung 7 arbeitet wie folgt:
Während eines Filtrationsbetriebs gemäß Figur 1 herrscht im Steuerraum 27 relativ zum Rückstellraum 28 ein Unterdruck, wodurch die Einheit 36 in die Offenstellung S2 verstellt ist. In der Folge ist die Durchlassöffnung 17 geöffnet. Die zu reinigende Gasströmung 3 strömt radial von der Rohseite 54 der Filtereinrichtung 1 von außen durch das Filterelement 2 in das Innere 10 des Filterelements 2 ein und tritt als gereinigte Gasströmung 4 durch die Durchlassöffnung 17 aus und gelangt so auf die Reinseite 55 der Filtereinrichtung 1. Während des Filtrationsbetriebs lagern sich die abgeschiedenen Verunreinigungen 14 an der Außenseite des Filterelements 2 an.

Wenn nun eine Regeneration des Filterelements 2 bzw. eine Rückspülung des Filterelements 2 durchgeführt werden soll, wird über das Zuführrohr 21 mit entsprechend hohem Druck das Rückspülmedium 16 zugeführt. In der Folge herrscht im Steuerraum 27 gegenüber dem Rückstellraum 28 ein Überdruck, wodurch die Einheit 36 in die Schließstellung S1 verstellt wird. Danach ist die Durchlassöffnung 17 versperrt, so dass am Filterelement 2 keine Durchströmung mit zu reinigendem Gas stattfindet. Stattdessen wird das Filterelement 2 an seiner Innenseite über die Rotationsdüsen 9 mit dem Rückspülmedium beaufschlagt, wodurch die außen angelagerten Verunreinigungen 14 abgelöst werden. Da durch die verschlossene Durchlassöffnung 17 keine Durchströmung des Filterelements 2 von außen nach innen erfolgt, können die Verunreinigungen 14 rohseitig schwerkraftbedingt abfallen.

Anschließend kann nach Beendigung des Rückspülvorgangs und Beendigung der Zuführung des Rückspülmediums der Druck im Steuerraum 27 wieder abfallen, so dass erneut die Stauklappe 35 in die Offenstellung S2 verstellt wird. Durch das Öffnen der Durchlassöffnung 17 stellt sich erneut der Filtrationsbetrieb mit einer Durchströmung des Filterelements 2 von außen nach innen mit dem zu reinigenden Gas 3 ein.

Bei den hier gezeigten Beispielen ist die Grundplatte 6 ein integraler Bestandteil eines nicht näher gezeigten Gehäuses der Filtereinrichtung 1. Bei einer anderen Ausführungsform ist die Grundplatte 6 separat von diesem Gehäuse hergestellt und z.B. nach Art einer Ringscheibe konzipiert, an der die Konsole 18 befestigt ist. Auf diese Weise lässt sich die Steuereinrichtung 7 bzw. die gesamte Reinigungseinrichtung 8 als vormontierbare Einheit realisieren, die nachträglich in das Gehäuse der Filtereinrichtung 1 eingebaut werden kann.

## Patentansprüche

1. Steuereinrichtung zum Ansteuern einer Rotationsdüse (9) zum Rückspülen wenigstens eines Filterelements (2) einer Filtereinrichtung (1) zum Filtern eines Gases,
- mit einer Grundplatte (6), die eine Durchlassöffnung (17) für gefiltertes Gas aufweist,
- mit einer an der Grundplatte (6) befestigten Konsole (18), an der ein Zuführrohr (21) zum Zuführen von Rückspülmedium zur Rotationsdüse (9) befestigt ist,
- mit einem an der Konsole (18) und/oder am Zuführrohr (21) befestigten Zylinderkörper (22), der einen das Zuführrohr (21) umschließenden Zylinder (23) enthält,
- mit einem im Zylinderkörper (22) axial verstellbaren Kolben (26), der im Zylinder (23) einen Steuerraum (27), der mit einem Innenraum (29) des Zuführrohrs (21) fluidisch verbunden ist, von einem zur Umgebung (31) des Zylinderkörpers (22) offenen Rückstellraum (28) trennt,
- mit einer Steuerhülse (32), die außen am Zuführrohr (21) axial verstellbar und axial geführt ist und die mit dem Kolben (26) verbunden ist,
- mit einer Stauscheibe (35) zum Steuern der Durchlassöffnung (17), die mit der Steuerhülse (32) verbunden ist,
- wobei die Stauscheibe (35), die Steuerhülse (32) und der Kolben (26) eine Einheit (36) bilden, die abhängig von der Druckdifferenz zwischen Steuerraum (27) und Rückstellraum (28) zwischen einer Schließstellung (S1), in der die Stauscheibe (35) die Durchlassöffnung (17) verschließt, und einer Offenstellung (S2) verstellbar ist, in der die Stauscheibe (35) die Durchlassöffnung (17) öffnet,
**dadurch gekennzeichnet,**
**dass** die Steuerhülse (32) aus einer Messinglegierung besteht, während das Zuführrohr (21) aus einer Eisenlegierung oder aus einer Leichtmetalllegierung hergestellt ist.

2. Steuereinrichtung nach Anspruch 1,
**dadurch gekennzeichnet,**
**dass** die Messinglegierung der Steuerhülse (32) Blei enthält.

3. Steuereinrichtung nach Anspruch 1 oder 2,
**dadurch gekennzeichnet,**
**dass** die Messinglegierung der Steuerhülse (32) einen Bleianteil von minimal 1 Gew.-% und maximal 5 Gew.-% enthält.

4. Steuereinrichtung nach einem der Ansprüche 1 bis 3,
**dadurch gekennzeichnet,**
**dass** die Messinglegierung der Steuerhülse (32) einen Zinkanteil von mindestens 30 Gew.-% enthält.

5. Steuereinrichtung nach einem der Ansprüche 1 bis 4,
**dadurch gekennzeichnet,**
**dass** die Messinglegierung durch Cu Zn 39 Pb 3 gebildet ist.

6. Steuereinrichtung nach einem der Ansprüche 1 bis 5,
**dadurch gekennzeichnet,**
**dass** das Zuführrohr (21) aus Stahl oder aus einer Aluminiumlegierung besteht.

7. Steuereinrichtung nach einem der Ansprüche 1 bis 6,
**dadurch gekennzeichnet,**
- **dass** die Steuerhülse (32) einen ersten Endabschnitt (33), an dem der Kolben (26) angebracht ist, und einen zweiten Endabschnitt (34) aufweist, an dem die Stauscheibe (35) angebracht ist und der vom ersten Endabschnitt (33) axial beabstandet ist,
- **dass** die Steuerhülse (32) nur im Bereich der beiden Endabschnitte (33, 34) am Zuführrohr (21) anliegt.

8. Steuereinrichtung nach einem der Ansprüche 1 bis 7,
**dadurch gekennzeichnet,**
**dass** die Stauscheibe (35) beweglich an der Steuerhülse (32) gehalten ist.

9. Steuereinrichtung nach einem der Ansprüche 1 bis 8,
**dadurch gekennzeichnet,**
- **dass** die Stauscheibe (35) mittels eines Federelements (39) axial federnd an der Steuerhülse (32) abgestützt ist, und/oder
- **dass** an der Steuerhülse (32) eine Haltescheibe (42) axial abgestützt ist, an der die Stauscheibe (35) über ein elastisches Element (41) axial abgestützt ist.

10. Steuereinrichtung nach einem der Ansprüche 1 bis 9,
**dadurch gekennzeichnet,**
**dass** der Kolben (26) durch mehrere Kolbenscheiben (46) gebildet ist, die an der Steuerhülse (32) axial gesichert sind.

11. Steuereinrichtung nach den Ansprüchen 9 und 10,
**dadurch gekennzeichnet,**
**dass** die Kolbenscheiben (46) und die Haltescheibe (42) baugleich sind.

12. Steuereinrichtung nach einem der Ansprüche 1 bis 11,
**dadurch gekennzeichnet,**
- **dass** die Steuerhülse (32) einen ersten Endabschnitt (33) zum Anbringen des Kolbens (46) und einen zweiten Endabschnitt (34) zum Anbringen der Stauscheibe (35) aufweist,
- **dass** die beiden Endabschnitte (33, 34) identisch ausgestaltet sind.

13. Steuereinrichtung nach einem der Ansprüche 1 bis 12,
**dadurch gekennzeichnet,**
**dass** die Stauscheibe (35) einen mit der Steuerhülse (32) verbundenen Innenringbereich (50) und einen in der Schließstellung (S1) mit einem die Durchlassöffnung (17) einfassenden Öffnungsrand (38) der Grundplatte (6) zusammenwirkenden Außenringbereich (51) aufweist, die axial zueinander versetzt sind.

14. Reinigungseinrichtung für eine Filtereinrichtung (1) zum Filtern eines Gases, zum Beispiel Luft,
- mit mindestens einer Rotationsdüse (9) zum Rückspülen wenigstens eines Filterelements (2) der Filtereinrichtung (1),
- mit einer Steuereinrichtung (7) zum Ansteuern der wenigstens einen Rotationsdüse (9) nach einem der Ansprüche 1 bis 13,
- wobei das Zuführrohr (21) fluidisch mit der jeweiligen Rotationsdüse (9) gekoppelt ist.

15. Filtereinrichtung zum Filtern eines Gases, zum Beispiel Luft,
- mit mindestens einem ringförmigen Filterelement (2),
- mit mindestens einer Reinigungseinrichtung (8) nach Anspruch 14,
- wobei das Filterelement (2) mit einer axialen Stirnseite an der Grundplatte (6) gehalten ist,
- wobei die jeweilige Rotationsdüse (9) im Inneren (10) des Filterelements (2) angeordnet ist.

## Claims

1. Control device for controlling a rotary nozzle (9) for backwashing at least one filter element (2) of a filter device (1) for filtering a gas,
- with a base plate (6) that comprises an outlet opening (17) for filtered gas,
- with a bracket (18) fastened to the base plate (6), on which is fastened a feed pipe (21) for feeding backwash medium to the rotary nozzle (9)
- with a cylindrical body (22) fastened to the bracket (18) and/or to the feed pipe (21), which contains a cylinder (23) surrounding the feed pipe (21),
- with a piston (26) axially adjustable in the cylindrical body (22), which in the cylinder (23) separates a control chamber (27) that is fluidly connected to an interior (29) of the feed pipe (21), from a resetting chamber (28) open to the surroundings (31) of the cylindrical body (22),
- with a control sleeve (32), which is axially adjustable and axially guided externally on the feed pipe (21) and is connected to the piston (26),
- with a baffle plate (35) for controlling the outlet opening (17), which is connected to the control sleeve (32),
- wherein the baffle plate (35), the control sleeve (32) and the piston (26) form a unit (36), which depending on the pressure difference between the control chamber (27) and resetting chamber (28) is adjustable between a closing position (S1), in which the baffle plate (35) closes the outlet opening (17), and an open position (S2), in which the baffle plate (35) opens the outlet opening (17),
**characterised in that** the control sleeve (32) is formed from a brass alloy, while the feed pipe (21) is produced from an iron alloy or from a light alloy.

2. Control device according to claim 1,
**characterised in that**
the brass alloy of the control sleeve (32) contains lead.

3. Control device according to claim 1 or 2,
**characterised in that**
the brass alloy of the control sleeve (32) contains lead in an amount of at least 1 wt. % and at most 5 wt. %.

4. Control device according to any one of claims 1 to 3,
**characterised in that**
the brass alloy of the control sleeve (32) contains zinc in an amount of at least 30 wt. %.

5. Control device according to any one of claims 1 to 4,
**characterised in that**
the brass alloy is formed by Cu Zn 39 Pb 3.

6. Control device according to any one of claims 1 to 5,
**characterised in that**
the feed pipe (21) is formed from steel or an aluminium alloy.

7. Control device according to any one of claims 1 to 6,
**characterised in that**
- the control sleeve (32) comprises a first end section (33), to which the piston (26) is attached, and a second end section (34), to which the baffle plate (35) is attached and is axially spaced apart from the first end section (33),
- the control sleeve (32) abuts the feed pipe (21) only in the region of the two end sections (33, 34).

8. Control device according to any one of claims 1 to 7,
**characterised in that**
the baffle plate (35) is moveably held on the control sleeve (32).

9. Control device according to any one of claims 1 to 8,
**characterised in that**
- the baffle plate (35) is supported axially flexibly on the control sleeve (32) by means of a spring element (39), and/or
- a retaining disc (42) is axially supported on the control sleeve (32), on which the baffle plate (35) is axially supported via an elastic element (41).

10. Control device according to any one of claims 1 to 9,
**characterised in that**
the piston (26) is formed by multiple piston discs (46), which are axially secured to the control sleeve (32).

11. Control device according to any one of claims 9 and 10,
**characterised in that**
the piston discs (46) and the retaining disc (42) are structurally identical.

12. Control device according to any one of claims 1 to 11,
**characterised in that**
- the control sleeve (32) comprises a first end section (33) for attaching the piston (46) and a second end section (34) for attaching the baffle plate (35),
- the two end sections (33, 34) are formed identically.

13. Control device according to any one of claims 1 to 12,
**characterised in that**
the baffle plate (35) comprises an inner annular region (50) connected to the control sleeve (32) and an outer annular region (51) cooperating in the closed position (S1) with an opening edge (38) of the base plate (6) surrounding the outlet opening (17), which are axially offset with respect to one another.

14. Cleaning device for a filter device (1) for filtering a gas, for example air,
- with at least one rotary nozzle (9) for backwashing at least one filter element (2) of the filter device (1),
- with a control device (7) for controlling the at least one rotary nozzle (9) according to any one of claims 1 to 13,
- wherein the feed pipe (21) is fluidly coupled to the respective rotary nozzle (9).

15. Filter device for filtering a gas, for example air,
- with at least one annular filter element (2),
- with at least one cleaning device (8) according to claim 14,
- wherein the filter element (2) is held with an axial end face on the base plate (6),
- wherein the respective rotary nozzle (9) is arranged in the interior (10) of the filter element (2).

## Revendications

1. Dispositif de commande pour la commande d'une buse de rotation (9) pour le rinçage à contre-courant au moins d'un élément de filtre (2) d'un dispositif de filtration (1) pour la filtration d'un gaz,
- avec une plaque de base (6) qui présente une ouverture de passage (17) pour du gaz filtré,
- avec une console (18) fixée au niveau de la plaque de base (6) au niveau de laquelle un tube d'alimentation (21) est fixé pour l'alimentation de fluide de rinçage à contre-courant à la buse de rotation (9),
- avec un corps de cylindre (22) fixé au niveau de la console (18) et/ou au niveau du tube d'alimentation (21) qui contient un cylindre (23) entourant le tube d'alimentation (21),
- avec un piston (26) réglable axialement dans le corps de cylindre (22) qui sépare dans le cylindre (23) un espace de commande (27) qui est raccordé fluidiquement à un espace intérieur (29) du tube d'alimentation (21), d'un espace de rappel (28) ouvert vers l'environnement (31) du corps de cylindre (22),
- avec une douille de commande (32) qui est réglable axialement à l'extérieur au niveau du tube d'alimentation (21) et guidée axialement et qui est raccordée au piston (26),
- avec un disque de retenue (35) pour la commande de l'ouverture de passage (17) qui est raccordée à la douille de commande (32),
- dans lequel le disque de retenue (35), la douille de commande (32) et le piston (26) forment une unité (36) qui est réglable en fonction de la différence de pression entre l'espace de commande (27) et l'espace de rappel (28) entre une position de fermeture (S1) dans laquelle le disque de retenue (35) ferme l'ouverture de passage (17), et une position ouverte (S2) dans laquelle le disque de retenue (35) ouvre l'ouverture de passage (17),
**caractérisé en ce**
**que** la douille de commande (32) se compose d'un alliage de laiton alors que le tube d'alimentation (21) est fabriqué en un alliage de fer ou un alliage de métal léger.

2. Dispositif de commande selon la revendication 1,
**caractérisé en ce**
**que** l'alliage de laiton de la douille de commande (32) contient du plomb.

3. Dispositif de commande selon la revendication 1 ou 2,
**caractérisé en ce**
**que** l'alliage de laiton de la douille de commande (32) contient une part de plomb de 1% en poids minimum et de 5% en poids maximum.

4. Dispositif de commande selon l'une quelconque des revendications 1 à 3,
**caractérisé en ce**
**que** l'alliage de laiton de la douille de commande (32) contient une part de zinc d'au moins 30% en poids.

5. Dispositif de commande selon l'une quelconque des revendications 1 à 4,
**caractérisé en ce**
**que** l'alliage de laiton est formé par du Cu Zn 39 Pb 3.

6. Dispositif de commande selon l'une quelconque des revendications 1 à 5,
**caractérisé en ce**
**que** le tube d'alimentation (21) se compose d'acier ou d'un alliage d'aluminium.

7. Dispositif de commande selon l'une quelconque des revendications 1 à 6,
**caractérisé en ce**
- **que** la douille de commande (32) présente une première section d'extrémité (33) au niveau de laquelle le piston (26) est monté, et une seconde section d'extrémité (34) au niveau de laquelle le disque de retenue (35) est monté et qui est espacée axialement de la première section d'extrémité (33),
- **que** la douille de commande (32) repose seulement dans la zone des deux sections d'extrémité (33, 34) contre le tube d'alimentation (21).

8. Dispositif de commande selon l'une quelconque des revendications 1 à 7,
**caractérisé en ce**
**que** le disque de retenue (35) est maintenu de manière mobile au niveau de la douille de commande (32).

9. Dispositif de commande selon l'une quelconque des revendications 1 à 8,
**caractérisé en ce**
- **que** le disque de retenue (35) est en appui au moyen d'un élément de ressort (39) de manière élastique axialement contre la douille de commande (32), et/ou
- **qu'**un disque de maintien (42) est en appui axialement contre la douille de commande (32), contre lequel le disque de retenue (35) est en appui axialement par le biais d'un élément élastique (41).

10. Dispositif de commande selon l'une quelconque des revendications 1 à 9,
**caractérisé en ce**
**que** le piston (26) est formé par plusieurs disques de piston (46) qui sont bloqués axialement au niveau de la douille de commande (32).

11. Dispositif de commande selon les revendications 9 et 10,
**caractérisé en ce**
**que** les disques de piston (46) et le disque de maintien (42) sont de même construction.

12. Dispositif de commande selon l'une quelconque des revendications 1 à 11,
**caractérisé en ce**
- **que** la douille de commande (32) présente une première section d'extrémité (33) pour le montage du piston (46) et une seconde section d'extrémité (34) pour le montage du disque de retenue (35),
- **que** les deux sections d'extrémité (33, 34) sont configurées de manière identique.

13. Dispositif de commande selon l'une quelconque des revendications 1 à 12,
**caractérisé en ce**
**que** le disque de retenue (35) présente une zone annulaire intérieure (50) raccordée à la douille de commande (32) et une zone annulaire extérieure (51) coagissant dans la position de fermeture (S1) avec un bord d'ouverture (38) entourant l'ouverture de passage (17) de la plaque de base (6) qui sont en déport axialement l'une de l'autre.

14. Dispositif de nettoyage pour un dispositif de filtration (1) pour la filtration d'un gaz, par exemple de l'air,
- avec au moins une buse de rotation (9) pour le rinçage à contre-courant au moins d'un élément de filtre (2) du dispositif de filtration (1),
- avec un dispositif de commande (7) pour la commande de l'au moins une buse de rotation (9) selon l'une quelconque des revendications 1 à 13,
- dans lequel le tube d'alimentation (21) est couplé par voie fluidique à la buse de rotation respective (9).

15. Dispositif de filtration pour la filtration d'un gaz, par exemple de l'air,
- avec au moins un élément de filtre annulaire (2),
- avec au moins un dispositif de nettoyage (8) selon la revendication 14,
- dans lequel l'élément de filtre (2) est maintenu avec un côté avant axial au niveau de la plaque de base (6),
- dans lequel la buse de rotation respective (9) est agencée à l'intérieur (10) de l'élément de filtre (2).
